# EUROPEAN PATENT APPLICATION

(11) **EP 4 717 596 A1**
(43) Date of publication of application: **01.04.2026**
(21) Application number: 24202655.7
(22) Date of filing: 25.09.2024
(51) Int. Cl.: B64C 27/04, B64D 1/22, B66C 15/02, B66C 1/10

(54) **A SWIVEL DEVICE FOR CONNECTING HUMAN AND/OR NON-HUMAN CARGO TO A ROTORCRAFT**

(71) Applicant: AIRBUS HELICOPTERS DEUTSCHLAND GmbH, 86609 Donauwörth (DE)
(72) Inventor: HEIDER, Christoph, 86641 RAIN AM LECH (DE); DINCA, Alexandru, 86609 DONAUWÖRTH (DE); VOGEL, Dominik, 86462 LANGWEID (DE)
(74) Representative: GPI Brevets

(57) **Abstract**

The invention relates to a swivel device (10) that is configured for connecting human and/or non-human cargo to a rotorcraft, comprising: a first mechanical coupling device (20) that is configured for being connected to the rotorcraft; a second mechanical coupling device (40) that is configured for being connected to the human and/or non-human cargo; and a swivel arrangement (30) that couples the first mechanical coupling device (20) with the second mechanical coupling device (40), wherein the swivel arrangement (30) provides for a primary load path (58) that is configured for load transfer between the second mechanical coupling device (40) and the first mechanical coupling device (20) in a normal operation mode, and a secondary redundant load path (59) that is configured for load transfer between the second mechanical coupling device (40) and the first mechanical coupling device (20) in an emergency operation mode.

## Description

The present invention is related to a swivel device that is configured for connecting human and/or non-human cargo to a rotorcraft.

Transportation of human and/or non-human cargo outside of a rotorcraft generally requires use of suitable human and/or non-human cargo attachment devices which are adapted to permit suspension of the human and/or non-human cargo from the rotorcraft. By way of example, the document US 6 189 834 B1 describes a respective human and/or non-human cargo attachment device which may be suspended from a rotorcraft.

Such human and/or non-human cargo attachment devices are generally available in a wide range of variations and usually attachable, e. g. via associated load hooks, to ropes or cables which are connected to the rotorcraft. By way of example, the documents CN 218 809 877 U, CN 107 082 362 A, and EP 3 166 845 B1 describe respective arrangements.

More generally, in civil, parapublic and military missions, ropes or cables with human and/or non-human cargo attachment devices may e. g. be used for rapidly inserting and/or extracting persons and/or cargo into/from various environments, in particular environments that do not permit landing of the rotorcraft. Such environments may e. g. include maritime environments such as offshore as well as oil and gas platforms, and terrestrial environments such as land in vegetated areas, mountains and urban territory.

However, transportation of human cargo outside of a rotorcraft as so-called "Human External Cargo" (HEC) requires development and manufacture of complex Personal Carrying Device Systems (PCDS) which are connectable to the rotorcraft and which should satisfy respectively applicable requirements that are standard and fundamental for safety-relevant components in aviation. Nevertheless, such PCDS are usually embodied with components that are manufactured according to non-aviation standards, in particular standards which describe procedures for manufacturing and testing mountain sports equipment, personal safety equipment or lifting equipment on construction sites. Examples of respective components are carabiners and swivels. More specifically, carabiners are highly specialized for use in mountain sports equipment or personal safety equipment, and are used to connect ropes and/or long lines to HEC or to connect one rope and/or long line to another one. Swivels, in turn, are used to prevent twist of a rope and/or long line by untwisting and preventing wrenching of a given rope, if required.

For instance, in conventional PCDS used with rotorcrafts, hoist rings according to lifting equipment are usually used for attachment to rotorcraft load hooks. Respectively applied ropes are usually single-strand and originate from mountain sports equipment or marine applications. Individual components are connected with mountain sports carabiners or lifting equipment connecting links, for example. If swivels are used, they usually originate from lifting equipment applications.

Nevertheless, in terms of development, qualification, production and documentation, these parts and components do not meet the requirements that are standard and fundamental for safety-relevant components in aviation. For safety-relevant components which are subject to fatigue, two forms of verification methods are applicable in aviation: the Safe Life and the Damage Tolerance Methods. In modern structures, the damage tolerance method is preferred if this is possible due to respectively underlying design constraints.

Moreover, a fundamental requirement for safety-relevant components in aviation is the traceability of the components back to the semi-finished product/raw material. Respective production steps must be defined in detail and "frozen". An aviation-certified quality assurance system must ensure compliance with the production steps and the quality of the manufactured components. These requirements are, however, generally not met by using standard components which are qualified according to non-aviation standards.

It is, therefore, an object of the present invention to provide a new human and/or non-human cargo attachment device which is configured for connecting human and/or non-human cargo to a rotorcraft, and which overcomes the above-described drawbacks.

This object is solved by a swivel device that is configured for connecting human and/or non-human cargo to a rotorcraft, which comprises the features of claim 1. More specifically, according to the present invention a swivel device that is configured for connecting human and/or non-human cargo to a rotorcraft comprises a first mechanical coupling device, a second mechanical coupling device, and a swivel arrangement. The first mechanical coupling device is configured for being connected to the rotorcraft. The second mechanical coupling device is configured for being connected to the human and/or non-human cargo. The swivel arrangement couples the first mechanical coupling device with the second mechanical coupling device and comprises a first load transfer component and a second load transfer component. The first load transfer component rotatably couples the first mechanical coupling device with the second mechanical coupling device in normal operation mode of the swivel arrangement to provide for a primary load path that is configured for load transfer between the second mechanical coupling device and the first mechanical coupling device via the first load transfer component in the normal operation mode. The second load transfer component couples the first mechanical coupling device with the second mechanical coupling device in an emergency operation mode of the swivel arrangement which results from a failure in the primary load path to provide for a secondary redundant load path that is configured for load transfer between the second mechanical coupling device and the first mechanical coupling device in the emergency operation mode.

Advantageously, the swivel device is designed with an alternative/second load path, i. e. the secondary redundant load path, and may also provide for an overload indicator. Preferably, all relevant components of the swivel device are made of stainless steel. Thus, no corrosion will occur in spite of areas with no corrosion protection.

In the normal operation mode, the load may e. g. be introduced in an illustrative realization from top to bottom through an associated housing into a needle-axial cylindrical roller bearing. The bearing may be supported to a primary pin as part of a primary load path and a fitting with a multi-cut lug may be screwed onto the primary pin. Between the fitting and the nut, there may be the overload detector. In case of an overload event, i. e. in the emergency operation mode, the overload detector preferably becomes squashed. A squashed indicator part is a clearly visible indicator for an overloaded equipment.

The secondary redundant load path of the swivel arrangement may e. g. be created by drilling a hole in the primary pin. A secondary screw may be inserted through the hole. At a respective lower attachment with a lower connector, the screw has a fitting with two lugs. A locking bolt of the lower connector may be inserted through these lugs. This means, that the secondary screw is integrated into the secondary redundant load path. A hemispherical nut may be screwed onto the secondary screw at a respective upper attachment with an upper connector. More specifically, there is an upper connector with a locking bolt. This part is preferably connected to the swivel arrangement by a multi-cut lug to an upper attachment fitting. The locking bolt may be secured against accidental opening by a double ball locking bolt and a spring-loaded pressure piece with a ball. The lower connector, which corresponds to the upper connector, is preferably attached to the lower attachment fitting. The hemispherical nut rests preferably on a fitting which has two lugs. The locking bolt of the upper connector is inserted into these lugs. This integrates the secondary screw into the secondary redundant load path. Preferably, the locking bolt is double secured against accidental opening. An existing play of the secondary redundant load path is adjusted by the hemispherical nut so that the load is transmitted via the needle roller axial cylindrical roller bearing during normal operation in the normal operation mode. In the event, that the outer primary load path fails, thus, resulting in the emergency operation mode, the load is carried by the secondary redundant load path. In order to achieve a redundant connection between the connectors and the fittings, the lugs are designed with multiple cuts.

Advantageously, the redundant design of the swivel arrangement and the multi-cut lug connections of the upper and lower connectors ensure a comparatively high level of operational reliability and security of the swivel device. Furthermore, in contrast to conventional systems available on the market, the swivel device and the upper and lower connectors may be adapted to respective application conditions comparatively quickly and without any tools. Areas of the upper and lower connectors, for which there is no redundant load path, can be visually checked. The stress level of the upper and lower connectors is such that no crack growth should occur under the expected cyclic loads.

Moreover, any types of human and/or non-human cargo attachment devices, such as so-called SPIE rigs, rigging plates or transportation platforms may be attached to the upper and/or lower connectors. However, error-prone safety hooks, which are used on construction sites and other market available products, are not used.

If desired, the swivel arrangement may be installed at the upper end of a long line. Thus, it is well protected from external influences, such as hard contact with ground and so on. If necessary, the swivel arrangement may alternatively be installed at the lower end of the long line. This gives the long line a ballast mass at the lower end and makes it more stable, especially at high rotorcraft speed.

Advantageously, all safety-relevant components of the swivel device may be manufactured from aviation-certified materials and under a quality assurance management system according to aviation standards. Thus, the swivel device is qualified according to a specification and test program specially created for HEC application.

According to some aspects, the swivel arrangement comprises a roller bearing, and the first load transfer component is rotatably mounted to the roller bearing.

Preferably, the swivel arrangement comprises a cup-shaped cap, and the roller bearing is at least partly arranged in an associated housing that is rigidly attached to the cup-shaped cap.

Preferably, the associated housing is secured at the cup-shaped cap by at least one grub screw.

Preferably, the cup-shaped cap comprises a bottom wall with two forks which respectively extend in a direction that points away from the associated housing.

Each one of the two forks of the cup-shaped cap may comprise at least two lugs which accommodate a first locking bolt that couples the at least two lugs with the first mechanical coupling device.

According to some aspects, the swivel arrangement comprises a fitting that is rigidly attached to the first load transfer component.

Preferably, the fitting comprises two forks, and each one of the two forks comprises at least two lugs which accommodate a second locking bolt that couples the at least two lugs with the second mechanical coupling device.

The second load transfer component may comprise a double lug head with two lugs which also accommodate the second locking bolt.

According to some aspects, the swivel arrangement comprises a double lug fitting that is rigidly attached to the second load transfer component, and the double lug fitting also accommodates the first locking bolt.

Preferably, the double lug fitting is arranged on the bottom wall between the two forks of the cup-shaped cap.

According to some aspects, the first load transfer component is sleeve-shaped.

Preferably, the second load transfer component is rod-shaped and at least partly accommodated in the sleeve-shaped first load transfer component.

According to some aspects, the swivel arrangement comprises an overload indicator.

Preferably, the overload indicator is mounted to the fitting.

Preferred embodiments of the invention are outlined by way of example in the following description with reference to the attached drawings. In these attached drawings, identical or identically functioning components and elements are labeled with identical reference numbers and characters and are, consequently, only described once in the following description.
- Figure 1 shows a perspective view of a rotorcraft that transports human and/or non-human cargo using a swivel device according to the present invention,
- Figure 2 shows a sectional view of the swivel device of Figure 1 with an upper connector, a swivel arrangement, and a lower connector,
- Figure 3 shows an exploded view of the swivel arrangement of Figure 2,
- Figure 4 shows an exploded view of the upper connector and the lower connector of Figure 2, and
- Figure 5 shows the sectional view of the swivel device according to Figure 2 for illustrating a primary load path and a secondary redundant load path thereof.

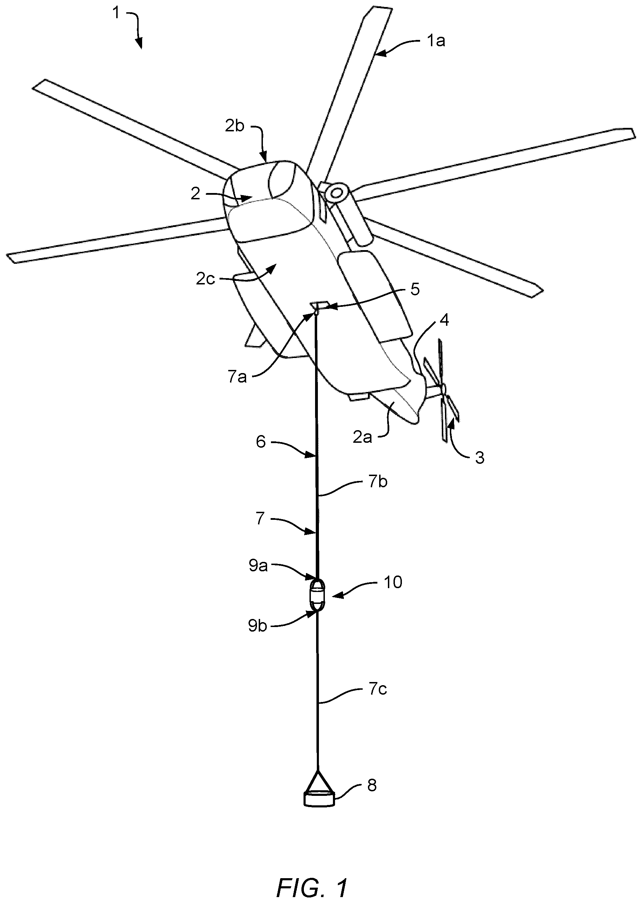

Figure 1 shows a rotorcraft 1 that illustratively comprises a fuselage 2 with a bottom shell 2c. By way of example, the fuselage 2 forms a cabin 2b for passengers and/or cargo and a tail boom 2a is mounted to the fuselage 2.

The rotorcraft 1 illustratively further comprises at least one main rotor 1a configured to provide lift and forward or backward thrust during operation, and at least one counter-torque device 3 configured to provide counter-torque during operation, i. e. to counter the torque created by rotation of the at least one main rotor 1a for purposes of balancing the rotorcraft 1 in terms of yaw.

The at least one counter-torque device 3 is illustratively provided at an aft section of the tail boom 2a, which preferably further comprises a fin 4. However, it should be noted that the at least one counter-torque device 3, as well as the fin 4 provided at the aft section of the tail boom 2a, are merely described for illustrating one possible realization of the rotorcraft 1.

According to one aspect, the rotorcraft 1 is provided with human and/or non-human cargo transportation means 6. By way of example, the rotorcraft 1 is embodied as a helicopter. However, use of the human and/or non-human cargo transportation means 6 is not limited to use with a helicopter. Instead, the human and/or non-human cargo transportation means 6 may at least be used with other rotorcrafts, such as e. g. tiltrotor aircrafts, compound helicopters, multicopters and so on.

By way of example, the human and/or non-human cargo transportation means 6 are attached to an associated attachment 5 provided at the bottom shell 2c. The attachment 5 is illustratively embodied as an attachment ring which may e. g. be connected to a cable that is coupled to a winch.

More specifically, the human and/or non-human cargo transportation means 6 preferably comprise a rope 7 that includes illustratively an upper rope 7b and a lower rope 7c. In a variant, the rope 7 is replaced by a cable.

By way of example, the upper rope 7b comprises a rope interface 7a, such as an eyelet, which is illustratively attached to the attachment 5, e. g. by means of a snap hook respectively carabiner. The upper rope 7b is preferably provided with an attachment interface 9a, such as a safety hook or snap hook respectively carabiner. Alternatively, the attachment interface 9a may be a loop of a rope or cable, a thimble or any other suitable attachment equipment. The attachment interface 9a is preferably provided to enable a secure and reliable attachment of external components to the upper rope 7b.

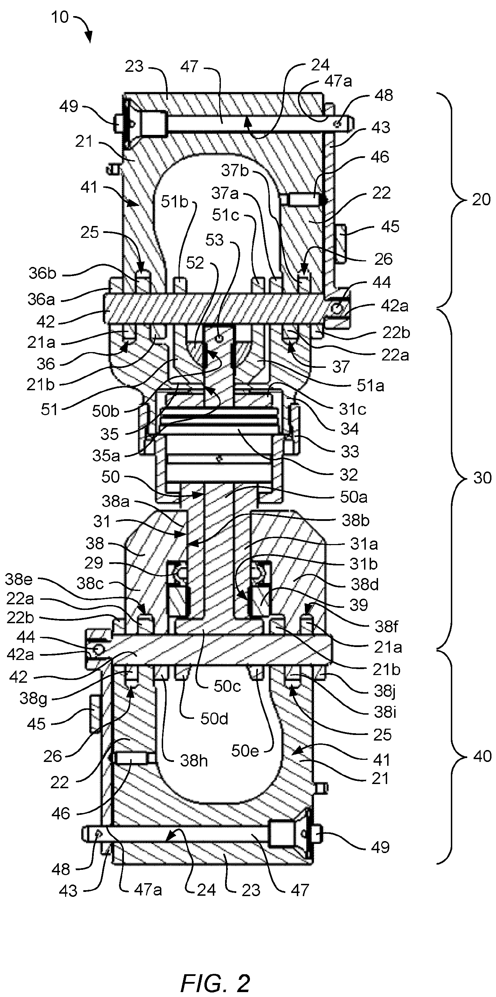

For instance, a swivel device 10 is attached to the attachment interface 9a. The swivel device 10 and/or its constituent components are further described below with reference to Figure 2 to Figure 5.

Illustratively, the swivel device 10 is further attached to an attachment interface 9b provided on the lower rope 7c. Similar to the attachment interface 9a, the attachment interface 9b may be a safety hook or snap hook respectively carabiner, a loop of a rope or cable, a thimble or any other suitable attachment equipment. The lower rope 7c, in turn, is preferably attached to human and/or non-human cargo 8 using any suitable attachment means, such as e. g. a load hook.

Figure 2 shows the swivel device 10 of Figure 1, which is configured for connecting the human and/or non-human cargo 8 of Figure 1 to the rotorcraft 1 of Figure 1. The swivel device 10 comprises a first mechanical coupling device 20 that is configured for being connected to the rotorcraft 1 of Figure 1, a second mechanical coupling device 40 that is configured for being connected to the human and/or non-human cargo 8 of Figure 1, and a swivel arrangement 30 that couples the first mechanical coupling device 20 with the second mechanical coupling device 40.

Illustratively, the first mechanical coupling device 20 forms an upper connector and is, therefore, hereinafter referred to as "the upper connector 20", for simplicity and clarity. In analogy, the second mechanical coupling device 40 forms illustratively a lower connector and is, therefore, hereinafter referred to as "the lower connector 40", for simplicity and clarity.

According to the present invention, the swivel arrangement 30 comprises a first load transfer component 31 and a second load transfer component 50. The swivel arrangement 30 may comprise an overload indicator 29. The overload indicator 29 may be provided for indicating an overload condition in operation of the swivel arrangement 30.

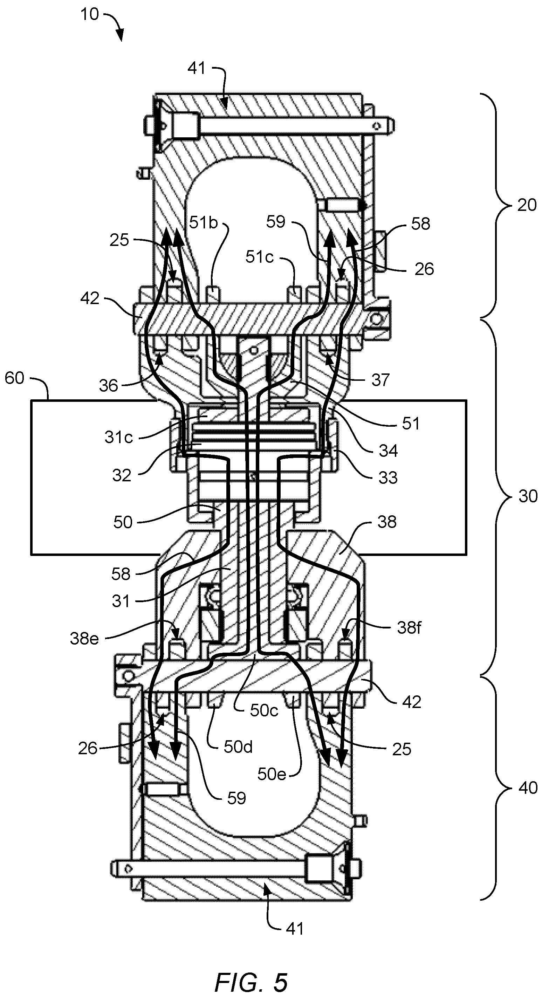

The first load transfer component 31 is also referred to as "the primary load transfer component 31" hereinafter and rotatably couples the upper connector 20 with the lower connector 40 in normal operation mode of the swivel arrangement 30 to provide for a primary load path (58 in Figure 5) that is configured for load transfer between the lower connector 40 and the upper connector 20 via the primary load transfer component 31 in the normal operation mode. The second load transfer component 50, in turn, is referred to as "the secondary load transfer component 50" and couples the upper connector 20 with the lower connector 40 in an emergency operation mode of the swivel arrangement 30 which results from a failure in the primary load path (58 in Figure 5) to provide for a secondary redundant load path (59 in Figure 5) that is configured for load transfer between the lower connector 40 and the upper connector 20 in the emergency operation mode.

By way of example, the primary load transfer component 31 is sleeve-shaped and the secondary load transfer component 50 is rod-shaped. Accordingly, the primary load transfer component 31 illustratively comprises a load sleeve 31a and the secondary load transfer component 50 illustratively comprises a load pin or rod 50a. Thus, the sleeve-shaped primary load transfer component 31 may accommodate at least partly the rod-shaped secondary load transfer component 50.

Preferably, the swivel arrangement 30 comprises a roller bearing 32, preferentially a needle-axial cylindrical roller bearing. Thus, the primary load transfer component 31 may be mounted rotatably to the roller bearing 32 to enable a swiveling movement. By way of example, the roller bearing 32 is mounted to the load sleeve 31a which illustratively comprises a collar 31c against which the roller bearing 32 abuts. The collar 31c may be provided on one axial end of the load sleeve 31a that may be provided on its other axial end with a thread 31b. The load sleeve 31a and the collar 31c may be formed integrally as a single component.

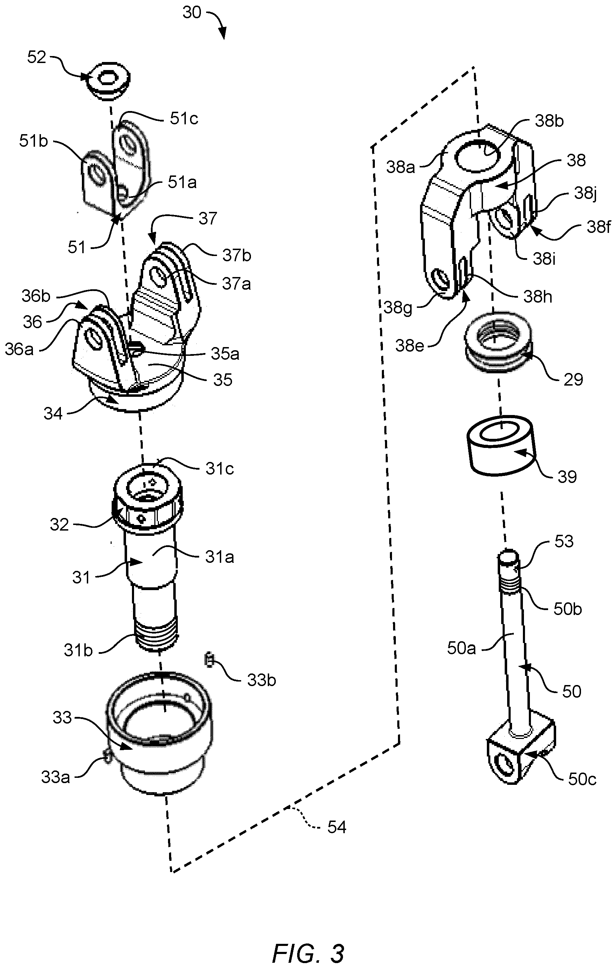

Illustratively, the swivel arrangement 30 further comprises a housing 33 and a cup-shaped cap 34. The housing 33 may be attached rigidly to the cup-shaped cap 34, e. g. by screwing the housing 33 on the cup-shaped cap 34. Moreover, the housing 33 may be secured at the cup-shaped cap 34 by one or more grub screws (33a, 33b in Figure 3). Furthermore, the roller bearing 32 may at least partly be arranged in the housing 33 that is rigidly attached to the cup-shaped cap 34. More particularly, the roller bearing 32 may be supported by the housing 33.

By way of example, the cup-shaped cap 34 comprises a bottom wall 35 that illustratively comprises a through hole 35a. More particularly, the bottom wall 35 may be provided with two forks 36, 37 which respectively extend in a direction that points away from the housing 33. Each one of the two forks 36, 37 may comprise at least two lugs 36a, 36b, 37a, 37b which accommodate a first upper locking bolt 42 that is associated with the upper connector 20 and that couples the at least two lugs 36a, 36b, 37a, 37b with the upper connector 20. Providing a total of at least four lugs, i. e. the lugs 36a, 36b, 37a, 37b, grants redundancy in load transfer.

Preferably, the swivel arrangement 30 further comprises a fitting 38 that is rigidly attached to the primary load transfer component 31. By way of example, the fitting 38 comprises two forks 38e, 38f and each one of the two forks 38e, 38f comprises at least two lugs 38g, 38h, 38i, 38j. Providing a total of at least four lugs, i. e. the lugs 38g, 38h, 38i, 38j, grants redundancy in load transfer.

The at least two lugs 38g, 38h, 38i, 38j accommodate a second lower locking bolt that is associated with the lower connector 40 and, for simplicity and clarity, also labelled with the reference sign 42. The lower locking bolt 42 may couple the at least two lugs 38g, 38h, 38i, 38j with the lower connector 40.

Illustratively, the fitting 38 comprises a base ring 38a that is provided with a through hole 38b. Preferably, the load sleeve 31a extends through the through hole 38b. The base ring 38a may further be provided with at least two vertical arms 38c, 38d which extend in a direction that points away from the housing 33. The at least two vertical arms 38c, 38d may be provided with the two forks 38e, 38f which comprise the at least two lugs 38g, 38h, 38i, 38j.

According to some aspects, the overload indicator 29 may be mounted to the fitting 38. For instance, the overload indicator 29 may be accommodated on the load sleeve 31a together with the fitting 38. More particularly, the fitting 38 and the overload indicator 29 may be fixed on the load sleeve 31a via a nut 39 that is screwed onto the thread 31b of the load sleeve 31a. Thus, the overload indicator 29 may be arranged on the load sleeve 31a between the base ring 38a of the fitting 38 and the nut 39. Accordingly, the overload indicator 29 may be squashed if a load induced via the fitting 38 exceeds a predetermined maximum value for indicating an overload condition in operation of the swivel arrangement 30.

Illustratively, the swivel arrangement 30 further comprises a double lug fitting 51 that is rigidly attached to the secondary load transfer component 50. The secondary load transfer component 50 may further comprise a double lug head 50c with two lugs 50d, 50e.

More particularly, the double lug fitting 51 is preferably attached to an axial end of the load pin 50a that extends through the through hole 35a in the bottom wall 35 of the cup-shaped cap 34. By way of example, the double lug fitting 51 is arranged on the bottom wall 35 between the two forks 36, 37 of the cup-shaped cap 34. The double lug head 50c, in turn, may be arranged on an axial end of the load pin 50a that is opposite to the axial end to which the double lug fitting 51 is attached. The load pin 50a and the double lug head 50c may be formed integrally as a single component.

The double lug fitting 51 illustratively comprises a fitting base 51a through which the load pin 50a extends such that a thread 50b provided on the load pin 50a is arranged on a side of the fitting base 51a that points away from the bottom wall 35 of the cup-shaped cap 34. Thus, the fitting base 51a of the double lug fitting 51 may be secured against the bottom wall 35 of the cup-shaped cap 34 by screwing a nut 52, in particular a hemispherical nut, on the thread 50b of the load pin 50a. The nut 52 may be secured on the load pin 50a e. g. by means of a securing pin 53.

By way of example, the double lug fitting 51 comprises at least two lugs 51b, 51c. The at least two lugs 51b, 51c may be aligned with the at least two lugs 36a, 36b, 37a, 37b of the cup-shaped cap 34 for accommodating the upper locking bolt 42. Accordingly, the double lug fitting 51 also accommodates the upper locking bolt 42.

The two lugs 50d, 50e of the double lug head 50c, in turn, may be aligned with the at least two lugs 38g, 38h, 38i, 38j of the fitting 38 for accommodating the lower locking bolt 42. Accordingly, the double lug head 50c also accommodates the lower locking bolt 42.

Illustratively, the lower locking bolt 42 attaches the swivel arrangement 30 to the lower connector 40. Likewise, the upper locking bolt 42 attaches the swivel arrangement 30 to the upper connector 20.

More specifically, the upper connector 20 preferably comprises at least two lugs 21a, 21b, 22a, 22b which may be aligned with the at least two lugs 51b, 51c of the double lug fitting 51 and the at least two lugs 36a, 36b, 37a, 37b of the cup-shaped cap 34 for accommodating the upper locking bolt 42. The at least two lugs 21a, 21b, 22a, 22b may form at least two forks 25, 26 on associated vertical arms 21, 22 of the upper connector 20. Providing a total of at least four lugs, i. e. the lugs 21a, 21b, 22a, 22b, grants redundancy in load transfer.

By way of example, the vertical arms 21, 22 are interconnected via a bridge member 23. Thus, the vertical arms 21, 22 and the bridge member 23 may form a U-shaped or arc-shaped attachment interface 41, e. g. for attachment to the attachment interface 9a of Figure 1 of the upper rope 7b of Figure 1. The bridge member 23 preferably comprises a through hole 24 for accommodation of a double ball locking bolt 47.

The double ball locking bolt 47 may be provided with an activatable unlocking mechanism 49 and one or more locking balls 48. For instance, activation of the activatable unlocking mechanism 49 may enable the one or more locking balls 48 to retreat into the double ball locking bolt 47.

Illustratively, the double ball locking bolt 47 is provided for securely attaching a mounting lever 43 to the upper connector 20 and, more particularly, to the vertical arm 22. Therefore, the mounting lever 43 preferably comprises a first locking bolt accommodation 47a which enables passing through of the double ball locking bolt 47 such that the one or more locking balls 48 may block the mounting lever 43 at the vertical arm 22.

The mounting lever 43 illustratively further comprises a second locking bolt accommodation 42a which enables passing through of the upper locking bolt 42. By way of example, the upper locking bolt 42 may be secured at the second locking bolt accommodation 42a by means of a securing pin 44 to couple the mounting lever 43 with the upper locking bolt 42 and to block the mounting lever 43 at the vertical arm 22.

Moreover, the vertical arm 22 may comprise a lateral retainer hook 45. For instance, the lateral retainer hook 45 may be L-shaped and extend laterally from the vertical arm 22 such that the mounting lever 43 may be retained by the lateral retainer hook 45.

Furthermore, a spring-loaded pressure pin with ball 46 may be arranged in the vertical arm 22 and oriented such that it pushes the mounting lever 43 in a direction pointing away from the vertical arm 22. Preferably, the ball of the spring-loaded pressure pin with ball 46 is accommodated in an associated pocket that may e. g. be milled in the mounting lever 43. Thus, the mounting lever 43 may be pushed into a blocking position in the lateral retainer hook 45 of the upper connector 20 and with respect to the one or more locking balls 48 of the double ball locking bolt 47.

According to some aspects, the upper connector 20 and the lower connector 40 may be embodied similar or identically within predetermined manufacturing tolerances. Therefore, all components of the lower connector 40 and the upper connector 20 are labelled with the same reference signs, for simplicity and clarity.

More specifically, similar to the upper connector 20 the lower connector 40 preferably comprises at least two lugs 21a, 21b, 22a, 22b. The at least two lugs 21a, 21b, 22a, 22b of the lower connector 40 may be aligned with the two lugs 50d, 50e of the double lug head 50c and with the at least two lugs 38g, 38h, 38i, 38j of the fitting 38 for accommodating the lower locking bolt 42. The at least two lugs 21a, 21b, 22a, 22b of the lower connector 40 may form at least two forks 25, 26 on associated vertical arms 21, 22 of the lower connector 40. Providing a total of at least four lugs, i. e. the lugs 21a, 21b, 22a, 22b, grants redundancy in load transfer.

By way of example, the vertical arms 21, 22 of the lower connector 40 are interconnected via a bridge member 23. Thus, the vertical arms 21, 22 and the bridge member 23 of the lower connector 40 may form a U-shaped or arc-shaped attachment interface 41, e. g. for attachment to the attachment interface 9b of Figure 1 of the lower rope 7c of Figure 1. The bridge member 23 of the lower connector 40 preferably comprises a through hole 24 for accommodation of a double ball locking bolt 47.

The double ball locking bolt 47 of the lower connector 40 may be provided with an activatable unlocking mechanism 49 and one or more locking balls 48. For instance, activation of the activatable unlocking mechanism 49 may enable the one or more locking balls 48 to retreat into the double ball locking bolt 47.

Illustratively, the double ball locking bolt 47 of the lower connector 40 is provided for securely attaching a mounting lever 43 to the lower connector 40 and, more particularly, to the vertical arm 22 of the lower connector 40. Therefore, the mounting lever 43 of the lower connector 40 preferably comprises a first locking bolt accommodation 47a which enables passing through of the double ball locking bolt 47 such that the one or more locking balls 48 may block the mounting lever 43 at the vertical arm 22.

The mounting lever 43 of the lower connector 40 illustratively further comprises a second locking bolt accommodation 42a which enables passing through of the lower locking bolt 42. By way of example, the lower locking bolt 42 may be secured at the second locking bolt accommodation 42a by means of a securing pin 44 to couple the mounting lever 43 of the lower connector 40 with the upper locking bolt 42 and to block the mounting lever 43 at the vertical arm 22.

Moreover, the vertical arm 22 of the lower connector 40 may comprise a lateral retainer hook 45. For instance, the lateral retainer hook 45 may be L-shaped and extend laterally from the vertical arm 22 of the lower connector 40 such that the mounting lever 43 may be retained by the lateral retainer hook 45.

Furthermore, a spring-loaded pressure pin with ball 46 may be arranged in the vertical arm 22 of the lower connector 40 and oriented such that it pushes the mounting lever 43 of the lower connector 40 in a direction pointing away from the vertical arm 22. Preferably, the ball of the spring-loaded pressure pin with ball 46 is accommodated in an associated pocket that may e. g. be milled in the mounting lever 43. Thus, the mounting lever 43 may be pushed into a blocking position in the lateral retainer hook 45 of the lower connector 40 and with respect to the one or more locking balls 48 of the double ball locking bolt 47 of the lower connector 40.

Figure 3 shows the swivel arrangement 30 of Figure 2 together with a virtual assembly line 54 indicating assembly of its constituent components. More specifically, the swivel arrangement 30 comprises the nut 52, the double lug fitting 51, the cup-shaped cap 34, the roller bearing 32, the load sleeve 31a, the housing 33, the fitting 38, the overload indicator 29, the nut 39, and the load pin 50a, as described above at Figure 2.

By way of example, assembly of the swivel arrangement 30 along the assembly line 54 may be performed as follows:
Firstly, the load sleeve 31a may be provided with the roller bearing 32 and arranged in the housing 33 such that the roller bearing 32 abuts against the housing 33. Subsequently, the housing 33 may be mounted to the cup-shaped cap 34 and secured thereon with one or more grub screws 33a, 33b. Then, the fitting 38 and the overload indicator 29 may be arranged on the load sleeve 31a and secured thereon by means of the nut 39.

Subsequently, the load pin 50a may be pushed through the load sleeve 31a such that the double lug head 50c of Figure 2 abuts against the nut 39 so that the axial end of the load pin 50a that is provided with the thread 50b of Figure 2 exits via the cup-shaped cap 34. Then, the double lug fitting 51 may be arranged on the load pin 50a and secured with the nut 52 which is preferably, however, not tightened. Accordingly, there remains a predefined axial play between the load pin 50a and the load sleeve 31a, i. e. a predefined play in direction of the assembly line 54. Thus, the load pin 50a is not under tension and may not transfer any load as long as the load sleeve 31a is intact and transferring load.

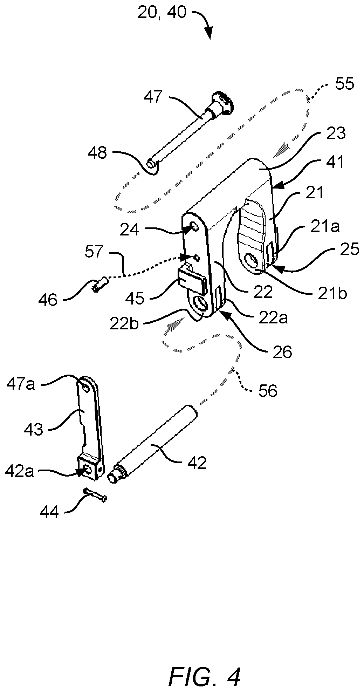

Figure 4 shows the upper and lower connectors 20, 40 of Figure 2 together with virtual assembly lines 55, 56, 57 indicating assembly of its constituent components. More specifically, each one of the upper and lower connectors 20, 40 comprises the U-shaped or arc-shaped attachment interface 41 with the through hole 24 in the bridge member 23, the vertical arms 21, 22 which comprise the at least two lugs 21a, 21b, 22a, 22b, the (upper or lower) locking bolt 42, the mounting lever 43, the retainer hook 45, the spring-loaded pressure pin with ball 46, and the double ball locking bolt 47 with the one or more locking balls 48, as described above at Figure 2.

By way of example, assembly of the upper and lower connectors 20, 40 along the assembly lines 55, 56, 57 may be performed as follows:
Firstly, the mounting lever 43 is secured on the locking bolt 42 with the securing pin 44 of Figure 2. Then, the at least two lugs 21a, 21b, 22a, 22b are aligned with the respectively associated lugs as described above at Figure 2 and the locking bolt 42 is inserted into the at least two lugs 21a, 21b, 22a, 22b and the respectively associated lugs along the assembly line 56.

Subsequently, the spring-loaded pressure pin with ball 46 is inserted into the vertical arm 22 along the assembly line 57. Then, the mounting lever 43 is rotated toward the retainer hook 45 until the mounting lever 43 covers the spring-loaded pressure pin with ball 46 and until the retainer hook 45 blocks the rotation movement. Thus, the locking bolt 42 is axially fixed in the U-shaped or arc-shaped attachment interface 41.

Afterwards, the double ball locking bolt 47 is inserted into the through hole 24 of the bridge member 23 of the U-shaped or arc-shaped attachment interface 41 along the assembly line 55 and pushed through the mounting lever 43 such that the one or more locking balls 48 block the mounting lever 43 at the double ball locking bolt 47.

Figure 5 shows the swivel device 10 of Figure 2 with the upper and lower connectors 20, 40 which are coupled via the locking bolts 42 to the swivel arrangement 30 that comprises the nut 52, the double lug fitting 51, the cup-shaped cap 34, the roller bearing 32, the load sleeve 31a, the housing 33, the fitting 38, the overload indicator 29, the nut 39, and the load pin 50a with the double lug head 50c. As described above at Figure 2, the swivel arrangement 30 comprises the primary load transfer component 31 which is configured for load transfer between the lower connector 40 and the upper connector 20 in the normal operation mode, and the secondary load transfer component 50 which is configured for load transfer between the lower connector 40 and the upper connector 20 in the emergency operation mode.

According to the present invention, the primary load transfer component 31 provides for a primary load path 58 in the normal operation mode. The secondary load transfer component 50, in turn, provides for a secondary redundant load path 59 in the emergency operation mode upon failure of the primary load path 58.

Illustratively, the primary load path 58 passes from the lower connector 40 via the locking bolt 42 of the lower connector 40 through the fitting 38, the load sleeve 31a, the housing 33, the cup-shaped cap 34, and the locking bolt 42 of the upper connector 20 into the upper connector 20. The secondary load path 59, in turn, passes from the lower connector 40 via the locking bolt 42 of the lower connector 40 through the double lug head 50c, the load pin 50, the double lug fitting 51, and the locking bolt 42 of the upper connector 20 into the upper connector 20.

Finally, it should be noted that modifications to the above-described embodiments are within the common knowledge of the person skilled in the art and, thus, also considered as being part of the present invention. For instance, in contrast to Figure 2 Figure 5 further illustrates a protecting ring 60. The protecting ring 60 may be provided to enclose at least a portion of the swivel arrangement 30 for protecting the enclosed portion e. g. against mechanical shocks or hard impacts on ground. Furthermore, the protecting ring 60 may be shaped such that it is easy for staff on ground to grip it. Moreover, by using a rubber ring for implementing the protecting ring 60, the swivel device 10 may be made floatable. Alternatively, or in addition, the vertical arm 21 of the upper and/or lower connector 20, 40 in Figure 2 to Figure 5 may be provided with a mechanical stop that is configured to fix the locking bolt 42 axially if it breaks/shears, and so on.

### Reference List

- 1: rotorcraft
- 1a: main rotor
- 2: fuselage
- 2a: tail boom
- 2b: cabin
- 2c: bottom shell
- 3: counter-torque device
- 4: fin
- 5: rope attachment
- 6: human and/or non-human cargo transportation means
- 7: ropes
- 7a: rope interface
- 7b: upper rope
- 7c: lower rope
- 8: human and/or non-human cargo
- 9a, 9b: attachment interfaces
- 10: swivel device
- 20: upper mechanical coupling device
- 21, 22: vertical arms
- 21a, 21b: lugs
- 22a, 22b: lugs
- 23: bridge member
- 24: through hole
- 25, 26: forks
- 29: overload indicator
- 30: swivel arrangement
- 31: primary load transfer component
- 31a: load sleeve
- 31b: thread
- 31c: collar
- 32: needle-axial cylindrical roller bearing
- 33: lower housing
- 33a, 33b: grub screws
- 34: cup-shaped upper cap
- 35: bottom wall
- 35a: through hole
- 36, 37: forks
- 36a, 36b: lugs
- 37a, 37b: lugs
- 38: lower fitting
- 38a: base ring
- 38b: through hole
- 38c, 38d: vertical arms
- 38e, 38f: forks
- 38g, 38h, 38i, 38j: lugs
- 39: nut
- 40: lower mechanical coupling device
- 41: arc-shaped attachment interface
- 42: locking bolt
- 42a: locking bolt accommodation
- 43: mounting lever
- 44: securing pin
- 45: retainer hook
- 46: spring-loaded pressure pin with ball
- 47: double ball locking bolt
- 47a: locking bolt accommodation
- 48: ball
- 49: activatable unlocking mechanism
- 50: secondary load transfer component
- 50a: load pin
- 50b: thread
- 50c: double lug head
- 50d, 50e: lugs
- 51: double lug fitting
- 51a: fitting base
- 51b,51c: lugs
- 52: hemispherical nut
- 53: securing pin
- 54, 55, 56, 57: assembly line
- 58: primary load path
- 59: secondary load path
- 60: protecting ring

## Claims

1. A swivel device (10) that is configured for connecting human and/or non-human cargo (8) to a rotorcraft (1), comprising:
a first mechanical coupling device (20) that is configured for being connected to the rotorcraft (1);
a second mechanical coupling device (40) that is configured for being connected to the human and/or non-human cargo (8); and
a swivel arrangement (30) that couples the first mechanical coupling device (20) with the second mechanical coupling device (40), wherein the swivel arrangement (30) comprises a first load transfer component (31) and a second load transfer component (50), wherein the first load transfer component (31) rotatably couples the first mechanical coupling device (20) with the second mechanical coupling device (40) in normal operation mode of the swivel arrangement (30) to provide for a primary load path (58) that is configured for load transfer between the second mechanical coupling device (40) and the first mechanical coupling device (20) via the first load transfer component (31) in the normal operation mode, and wherein the second load transfer component (50) couples the first mechanical coupling device (20) with the second mechanical coupling device (40) in an emergency operation mode of the swivel arrangement (30) which results from a failure in the primary load path (58) to provide for a secondary redundant load path (59) that is configured for load transfer between the second mechanical coupling device (40) and the first mechanical coupling device (20) in the emergency operation mode.

2. The swivel device (10) of claim 1, wherein the swivel arrangement (30) comprises a roller bearing (32), and wherein the first load transfer component (31) is rotatably mounted to the roller bearing (32).

3. The swivel device (10) of claim 2, wherein the swivel arrangement (30) comprises a cup-shaped cap (34), and wherein the roller bearing (32) is at least partly arranged in an associated housing (33) that is rigidly attached to the cup-shaped cap (34).

4. The swivel device (10) of claim 3, wherein the associated housing (33) is secured at the cup-shaped cap (34) by at least one grub screw (33a, 33b).

5. The swivel device (10) of claim 3 or 4, wherein the cup-shaped cap (34) comprises a bottom wall (35) with two forks (36, 37) which respectively extend in a direction that points away from the associated housing (33).

6. The swivel device (10) of claim 5, wherein each one of the two forks (36, 37) of the cup-shaped cap (34) comprises at least two lugs (36a, 36b, 37a, 37b) which accommodate a first locking bolt (42) that couples the at least two lugs (36a, 36b, 37a, 37b) with the first mechanical coupling device (20).

7. The swivel device (10) of any one of claims 2 to 6, wherein the swivel arrangement (30) comprises a fitting (38) that is rigidly attached to the first load transfer component (31).

8. The swivel device (10) of claim 7, wherein the fitting (38) comprises two forks (38e, 38f), and wherein each one of the two forks (38e, 38f) comprises at least two lugs (38g, 38h, 38i, 38j) which accommodate a second locking bolt (42) that couples the at least two lugs (38g, 38h, 38i, 38j) with the second mechanical coupling device (40).

9. The swivel device (10) of claim 8, wherein the second load transfer component (50) comprises a double lug head (50c) with two lugs (50d, 50e) which also accommodate the second locking bolt (42).

10. The swivel device (10) of claims 6 and 9, wherein the swivel arrangement (30) comprises a double lug fitting (51) that is rigidly attached to the second load transfer component (50), and wherein the double lug fitting (51) also accommodates the first locking bolt (42).

11. The swivel device (10) of claims 5 and 10, wherein the double lug fitting (51) is arranged on the bottom wall (35) between the two forks (36, 37) of the cup-shaped cap (34).

12. The swivel device (10) of any one of the preceding claims, wherein the first load transfer component (31) is sleeve-shaped.

13. The swivel device (10) of claim 12, wherein the second load transfer component (50) is rod-shaped and at least partly accommodated in the sleeve-shaped first load transfer component (31).

14. The swivel device (10) of any one of the preceding claims, wherein the swivel arrangement (30) comprises an overload indicator (29).

15. The swivel device (10) of claim 14 with one of claims 7 or 8, wherein the overload indicator (29) is mounted to the fitting (38).
